# EUROPEAN PATENT SPECIFICATION

(11) **EP 1 222 799 B1**
(45) Date of publication and mention of the grant of the patent: **12.10.2005**
(21) Application number: 00971667.1
(22) Date of filing: 20.10.2000
(51) Int. Cl.: H04M 3/42, H04M 3/56, H04M 7/00, H04M 3/493

(54) **PERSONAL INSTANT COMMUNICATION SYSTEM**
PERSÖNLICHES SOFORTIGES KOMMUNIKATIONSSYSTEM
SYSTEME DE COMMUNICATIONS PERSONNELLES INSTANTANEES

(30) Priority: 22.10.1999 US 161135 P; 28.12.1999 US 472999
(43) Date of publication of application: 17.07.2002
(73) Proprietor: Comverse Ltd, 69710 Tel-Aviv (IL)
(72) Inventor: LAOR, Alon, 49559 Petach-Tikva (IL); ZEVADI, Michael, 47213 Ramat-Hasharon (IL)
(74) Representative: Driver, Virginia Rozanne
(86) International application number: PCT/IB2000/001665
(87) International publication number: WO 2001/030057

(56) References cited:
- EP-A- 0 627 837
- EP-A- 0 817 457
- WO-A-97/13329
- DE-A- 19 815 347
- DE-A- 19 815 924
- FR-A- 2 607 340
- US-A- 5 283 731
- US-A- 5 848 134

## Description

### Field of the Invention

The present invention relates to the field of telecommunication. More particularly, the invention relates to the field of managing personal presence and communication (voice or instant messages) over telephone lines.

### Background of the Invention

Today, there is an emerging Internet-based 'culture' of CHAT, whereby people can connect (via a PC equipped with Internet connections and specialized software packages) to other people who are using similar technologies. They can 'CHAT' using text, or in some cases, Voice-over IP (Internet only). Among the software packages currently available, one can find ICQ™ from Mirabilis, and Instant Messaging™ from Microsoft. While the number of Internet users is still very limited (relative to those who use telephone communication, either fixed or mobile), there is no similar mechanism in the telecommunication world. Moreover, there is a need for telephone users to properly define their personal identity and control its publication, as well as manage the information regarding their presence and availability.

The Internet-based systems require users to be bound to a PC with an Internet connection. Hence, this deprives users that do not have access to a PC, or do not have sufficient skills/knowledge to operate it properly, or are not stationary - from using such a service. In addition, many telephone users, both fixed and mobile, would like to be able to get an indication of the presence of a candidate for chat, even if the identity of the candidate is unknown. It would be desirable to connect easily to a chosen match, and conduct a communication session in total privacy (i.e., NO personal details revealed to the other party). Moreover, it would be desirable to have an indication of the presence of individuals online.

Reference should be made to WO 97/13329 which discloses a method and apparatus for automating contact closure and US-A-5,848,134 which describes a method and apparatus for real -time information processing in a multi-media system.

All the methods described above have not yet provided satisfactory solutions to the subject of "chatting" over voice telecommunication lines, nor a satisfactory solution to an indication of the presence of an individual.

It is therefore an object of the present invention to provide such a method and system for carrying out "chat" sessions over telephone lines.

It is another object of the invention to provide a method and system for indicating the presence online of individuals.

It is another object of the invention to provide a method for creating matches between individuals willing to chat or communicate, according to their personal details and preferences.

It is another object of the invention to provide a method for searching for individuals or groups with similar objects of interest, as candidates for "chat".

Other objects and advantages will be apparent as the description proceeds.

### Summary of the Invention

In one aspect, the invention is directed to a method for carrying out telephone conversations and/or text/voice messages between two or more users related to their similar subjects of interest, comprising the following steps:
a) each user registers and communicates his personal profile and preferences to a system and assigns a weight to each preference according to its importance;
b) said system receives from the users said profiles and said weighted preferences and stores them;
c) said system matches between said users according to their profiles and weighted preferences;
d) said system presents to users a list of candidates for conversations according to the results of said match;
e) users select one or more said candidates from said results; and
f) said system creates a telephone connection between users and selected candidates.

The steps described above can be carried out in the above or any other order.

In the first aforesaid step, the user also registers as a member of the system. Since this step involves the provision of information by the user, it will be called "the provision stage" and carrying it out will be called "provisioning". Alterations in a pre-existing service may be done at any time, even in the middle of a chat conversation. Such alterations are called "re-provisioning".

According to a preferred embodiment of the invention, the privacy of each user is maintained by preventing any other user from accessing his personal profile. Each user, however, may decide to reveal or direct the system to reveal a part of his personal profile to one or more other users.

According to the invention, the system may create a telephone connection only between two users of among more than two users. The result may be designated respectively as a conversation session in a private forum or a conversation session in an open forum.

In another aspect, the invention provides an apparatus for carrying out telephone conversations between two or more users comprising:
a) a system comprising a memory that registers and stores the personal profile and preferences of each user, wherein a weight is assigned to each preference according to its importance to the corresponding user;
b) a processor that matches between said users according to their profiles and weighted preferences;
c) a presentation device that presents to users a list of candidates for conversations according to the results of the match; and
d) communication links that create telephone connections between users and selected candidates.

The control means, storage means, database management system and processing means are generally comprised in a central computer that manages the system of the invention and is suitably programmed to carry out the process of the invention in every specific case. The said control means may control or not control the aforesaid receiving means, depending on the way in which information, and particularly the personal profiles and preferences of the users, is conveyed to said receiving means. The said storage means are generally a memory comprised in the central computer.

The personal profiles and preferences of the users may be communicated to the aforesaid receiving means, viz, the provisioning, may be carried out, in any convenient way, e.g. by telephone, by PC, by fax, by E-mail, by mail, e.g. by sending filled questionnaires, etc..

Information relating to the communication between users and the system of the invention or between different users can be displayed on visual interfaces of the users' phones, if they are provided with such interfaces. Such information may be an invitation for chat, presence of individual online and so forth.

According to a preferred embodiment of the invention, a user can express his wish for conversation with another user by:
One) SMS (Short Message Service);
Two) WAP (Wireless Application Protocol, i.e. a protocol that enables a cellular telephone to run preprogrammed data processing applications);
Three) Voice-Messages or any other communication protocol/service that can work with telephone networks and handsets / terminals (SIM Tool KIT for example); or
Four) DTMF / IVR (dual tone multi frequency / Interactive Voice Response).

### Brief Description of the Drawings

The above and other characteristics and advantages of the invention will be better understood through the following illustrative and non-limiting detailed description of preferred embodiments thereof, with reference to the appended drawings, wherein:
Fig. 1 schematically illustrates the system layout, according to a preferred embodiment of the invention;
Fig. 2 schematically illustrates the system as a switchboard, according to a preferred embodiment of the invention;
Fig. 3 schematically illustrates data flow during chatting, according to a preferred embodiment of the invention;
Fig. 4 schematically illustrates data flow on provision (registration), according to a preferred embodiment of the invention;
Fig. 5 illustrates a flow chart of the user's activities, according to a preferred embodiment of the invention;
Fig. 6 illustrates a flow chart of the stage of the provision, according to a preferred embodiment of the invention;
Fig. 7 illustrates the Personal table and a Profiles' table, according to a preferred embodiment of the invention;
Fig. 8 schematically illustrates a Networked System architecture, according to a preferred embodiment of the invention;
Fig. 9 illustrates a flowchart of the service, according to a preferred embodiment of the invention; and
Fig. 10 schematically illustrates match tables, according to a preferred embodiment of the invention.

### Detailed Description of Preferred Embodiments

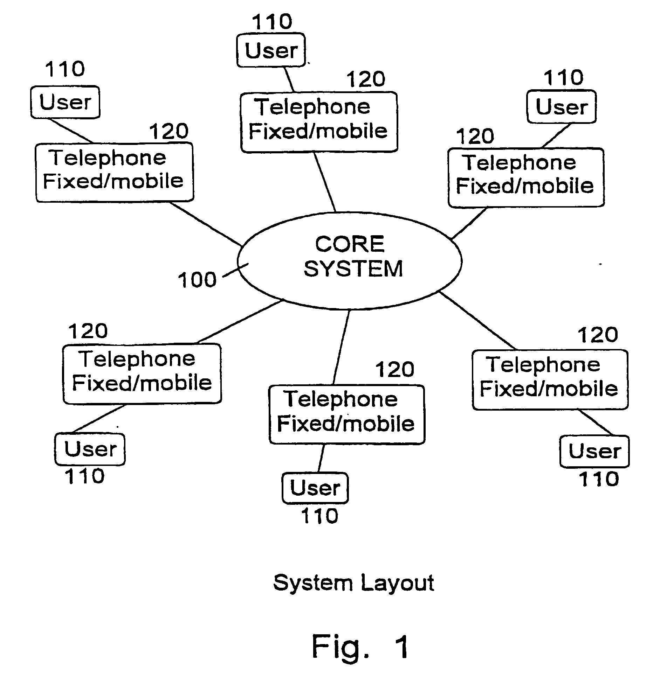

Fig. 1 schematically illustrates the system layout, according to a preferred embodiment of the invention. User 110 is connected to Core System 100 via his telephone (fixed / mobile) equipment 120. The Core System may be a server that contains computation means, memory means and appropriate software and/or hardware. The Core System must support a variety of communication mediums which connect the server to the users. The Core System carries out the connection between the chat participants. Therefore, it operates as a telephone network, whose operation is directed by a decision mechanism. Yet, the actual telephone switching is accomplished by the telephone network. The core system can either initiate a call through the telephone network (out-dialing in a service-node alternative) or signal the standard switch to perform the call (signaling/SS7 of an IN SCP).

The telephone connection between users and the core system can be done by using standard communication switches which communicate with the interface system on one side, and the telephone connections (Wireless protocols, E1, T1, IP) on the other. The telephone connections may be hardware and/or software produced and supplied by Cisco, Nortel, Siemens or others. In the event the switch does not have the proper connection capabilities required for this system, other complementary means can be used, such as:
- IN (Intelligent Network) SCP. As in standard IN/SCP implementation, each time the service is activated, the switch transfers the control (signaling data) to the SCP. The SCP, based on the match results and the service parameters, sends signaling controls to the switch indicating the call parameters. In the SCP implementation, the actual call initiation is made by the switch, according to the control signals (usually SS#7 protocol) sent by the SCP.

Alternatively, instead of the core system being connected to a telephone network and using that network to establish voice connections between or among the matched users (e.g. by passing telephone numbers of the respective users to the telephone network), the core system could be implemented within the telephone network.

In standard Service Node implementations - and unlike SCP implementations- it is the role of the Service Node to initiate the calls. In this case, the connection between the Switch and the Service Node is 'true' voice trunks (E1/T1), and NOT only signaling (SS#7), as in the SCP implementation Progeny of VSP/Comverse (former AMAREX, today - VSP division of Comverse). This platform works similarly to the Service Node, and enables link creation between lines for 2-party calls, as well as to full conferencing sessions.

There are optional modules that enable interfacing to external sources such as WEB, TV, IP. These enable connections across different media, such as telephone users with WEB surfers. For example, a WEB surfer can get an indication of the presence of an individual over his mobile telephone.

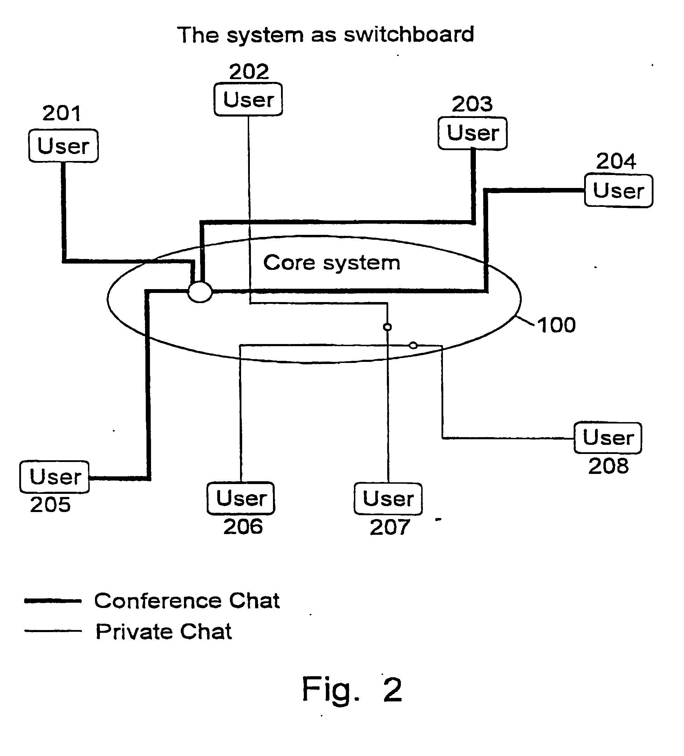

Fig. 2 schematically illustrates the system as a switchboard, according to a preferred embodiment of the invention. Users 201 to 208 are connected to Core System 100 via telephone lines.

The conversations ('chats') carried out are:
- Users 201, 203, 204, and 205 are participating in a "conference chat". A conference chat is a conversation opened to all the users, and as a rule is about a specific subject.
- Users 202 and 207 are having a "private chat". A private chat is a conversation carried out between two individuals, and no one else is permitted to participate in this chat.
- Users 206 and 208 are having a private chat.

With the acceptance of 206 and 208, other user(s) might join this session.

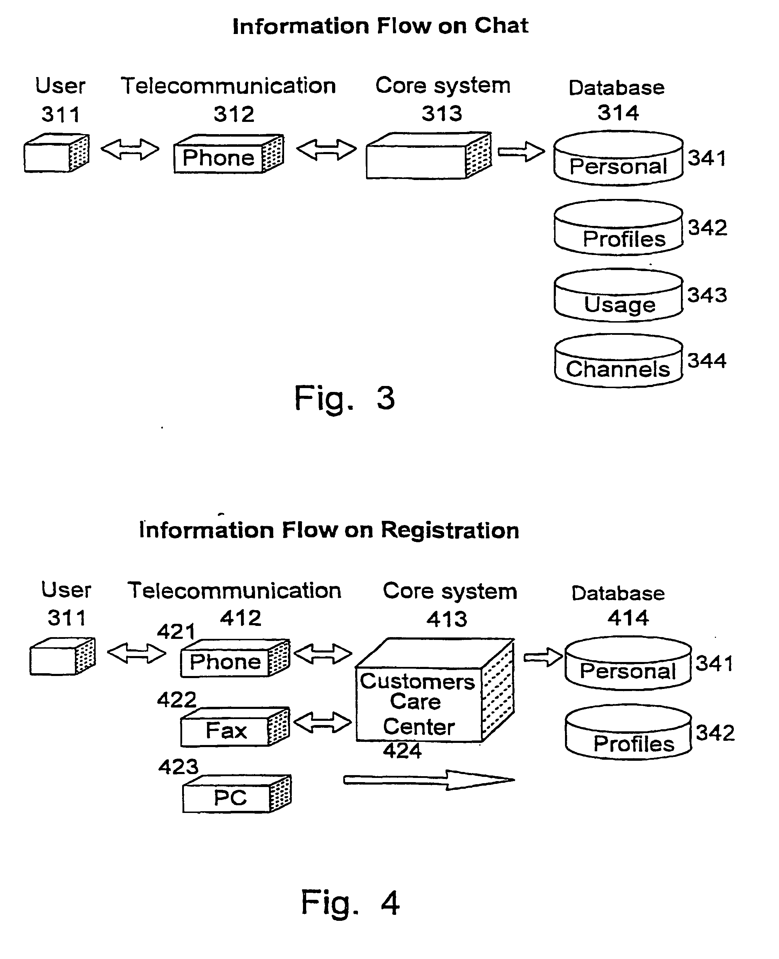

Fig. 3 schematically illustrates data flow during a chat session, according to a preferred embodiment of the invention. User 311 communicates via telecommunication means 312 to the Core System 313. Details regarding the chat session are stored in the usage table 343 of database 314.

The telecommunication means in this case comprises telephone 312.

The tables in database 314 which are updated at any time are:
- Personal table 341;
- Profiles table 342;
- Usage table 343;

Channels table 344 is updated during the chat.

According to a preferred embodiment of the invention, the database comprises the following tables:
- **Personal Table** 341 contains personal information about the user, such as name, address, credit card, preferences and so forth. It may also contain information about the amount of time the user has used the system and the charge due for this usage.
- **Profiles Table** 342 contains information about the profile of the person/community the user would like to chat with, etc. According to one embodiment of the invention, this table contains a list of the users who are online at a given moment and their availability for chat. A user is considered as 'available' if he is online and has expressed his interest in chatting.
- **Usage Table** 343, contains information about the usage of the system. For example, a record of the table may contain information about a performed session, such as :
   - User ID.
   - Date and time of the start of the session;
   - Date and time of the end of the session;
   - Length of duration of the session; and
   - **Channels Table** 344, contains information about the chat sessions (channels) which are in progress at a given moment.

In order to decrease the retrieval time from the tables, a more sophisticated structure may be implemented, such as chained-list, B-tree etc.

The database resides on a server with sufficient storage devices and computing performance. A configuration of such a server will depend upon such factors as the number of users, the size of databases and the traffic; a possible server to be used might be an Alpha server from Compaq. The database should be able to support some basic requirements of the system: performance, reliability, on-line manipulation (sort, search, select, extract, modify), locks, filtering and so forth. Any standard database supporting the above requirements can be used. For example, a relational database from Oracle of Informix might be employed. The database should be connected to the system by high-speed connection (LAN, for example);

Fig. 4 schematically illustrates data flow on provision (registration), according to a preferred embodiment of the invention. User 311 communicates via telecommunication means 412 with the Core system 413, which registers the relevant details into database 414. The user may communicate with the Core system 413 through a telephone 421 or by fax machine 422 or by using a PC 423. The database 414 comprises two tables, a Personal table 341 and a Profiles table 342 that are updated during the chat. The Core system 413 comprises a Customer Care Center 424 which assists the user to fill out a form.

The user may perform the provision in two ways:
- directly, using a PC 423. This can be done for example by filling a questionnaire and sending it to the Core System by e-mail, filling a questionnaire which is a part of a web-page, and so forth.
- with the assistance of the Customer Care System. Customer Care System (or one of several centers) provides the assistance of a customer-care specialist. The specialist will register on his behalf the preference profiles in the database 414 (The specialist can assist by tutoring the user in filling in the details). The user may perform the provision stage by telephone 421 or by fax 422. In case of fax, a questionnaire is sent to the Customer Care System, or alternatively analyzed by computation means, such as OCR (Optical Character Recognition) and OFR (Optical Form recognition). The questionnaire may also be sent by mail.

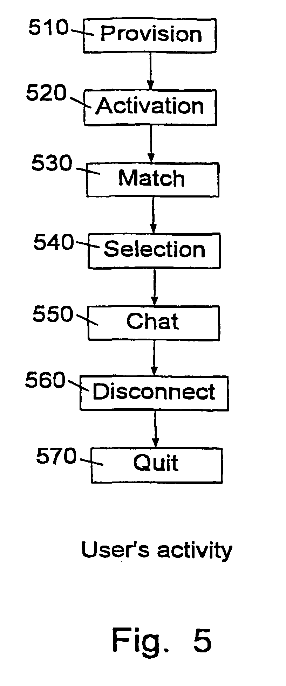

Fig. 5 illustrates a flow chart of the user's activities, according to a preferred embodiment of the invention.
- In step 510, the user registers and defines his personal profile, and the profiles of the desired candidates for communication (or community channels). The information will be used when the service performs a search for matching candidates.
- In step 520, the user informs the system of his availability for communication, and defines the service parameters, such as subject of interest (for this chat), profile of the persons he would like to chat with, and so forth.
- In step 530, the system performs a search, based on input from the user's profile, user's requested candidate profile/community channel, location and the other activated users' profiles (/active community channels).
- In step 540, the system notifies the user of the possible matches. During the chat session, a user can dynamically control various parameters such as to mark the current correspondent as 'preferred' for future matches. On multi-user chat sessions, a user can remove one or more of the participants from the session. This can be done via SMS (Short Message Service), PA (Personal Assistance), Voice message, WAP (Web Application Protocol) and so forth. If the user decides to select a match, then he indicates his choice using the interface system, and the system creates the connection to the matching user.
- In step 550, the user participates in a chat with the selected user/users.
- In step 560, the user disconnects the chat. At this stage, he may activate the system again, search for new partners for chat by returning to stage 520, or quit the system.
- In step 570, the user quits.

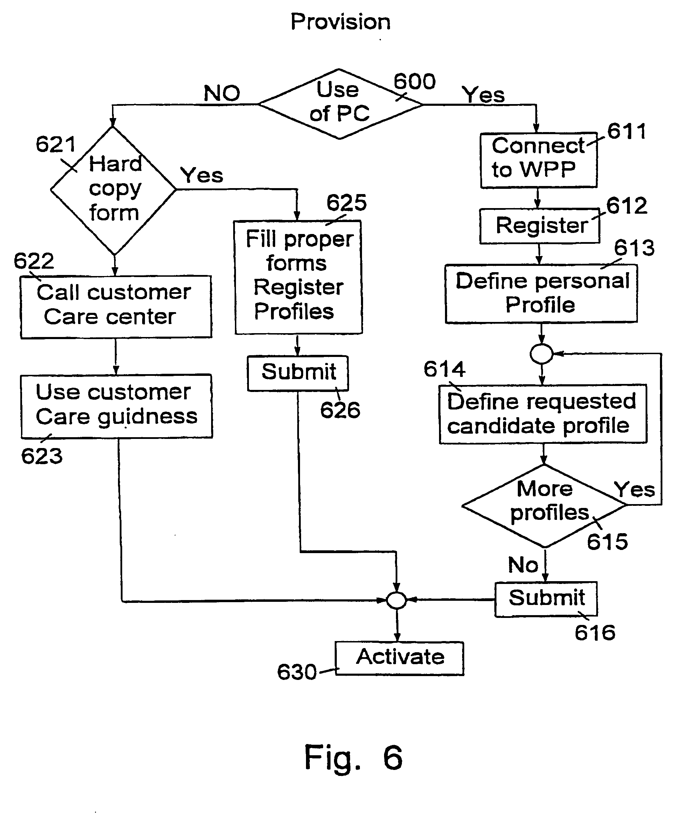

   Fig. 6 illustrates a flow chart of the Provision stage, according to a preferred embodiment of the invention.
- In step 600, the user decides whether to use a PC for provisioning. If the answer is positive, then the process continues to step 611; if otherwise, the process continues to step 621.
- In stage 611, which is the starting point when using PC for provisioning, the user connects to a WPP (Web Personal Provisioning, i.e. filling a questionnaire on a Web-page). The WPP resides - logically - at the service provider's premises, although it can reside on any server (WEB or other) that provides a link for users to the service provider's databases. An example of such a product is WPP from Comverse Network Systems.
- At 612, the user registers with the service.
- In stage 613, the user defines his personal profile
- In stage 614, the user defines the profile of the requested candidate /subject of chat-group for communication. The information will be used when the service performs the search for matching candidates.
- In stage 615, the user is asked if he wants to continue to define more profiles of persons he would like to chat with, or to submit the information defined so far to the core system. If the user decides to submit the information defined so far, then the control goes to step 616, and then to step 630. Otherwise, control goes to step 614.
- In step 616, the information is submitted to the core system;
- In step 621, which is the starting point of the provisioning process performed without PC, the user may fill out a hard copy form, and send it to the core system via fax (step 625). Alternatively, he can call Customer Care Center 424 of Fig. 4 above (step 622), which will fill out the form for the user according to his answers. Instead of fax, the user may employ other means for sending hardcopies, such as e-mail.
- In step 622, the user calls the Customer care center in order to register via telephone call;
- In step 623, the user receives instruction form the Customers care center;
- In step 626, the information is submitted to the core system;
- In step 630, the user is activated, i.e. the user is declared as available for chat. This can be done by placing an appropriate flag in the user's record (in Profiles' table of the database).

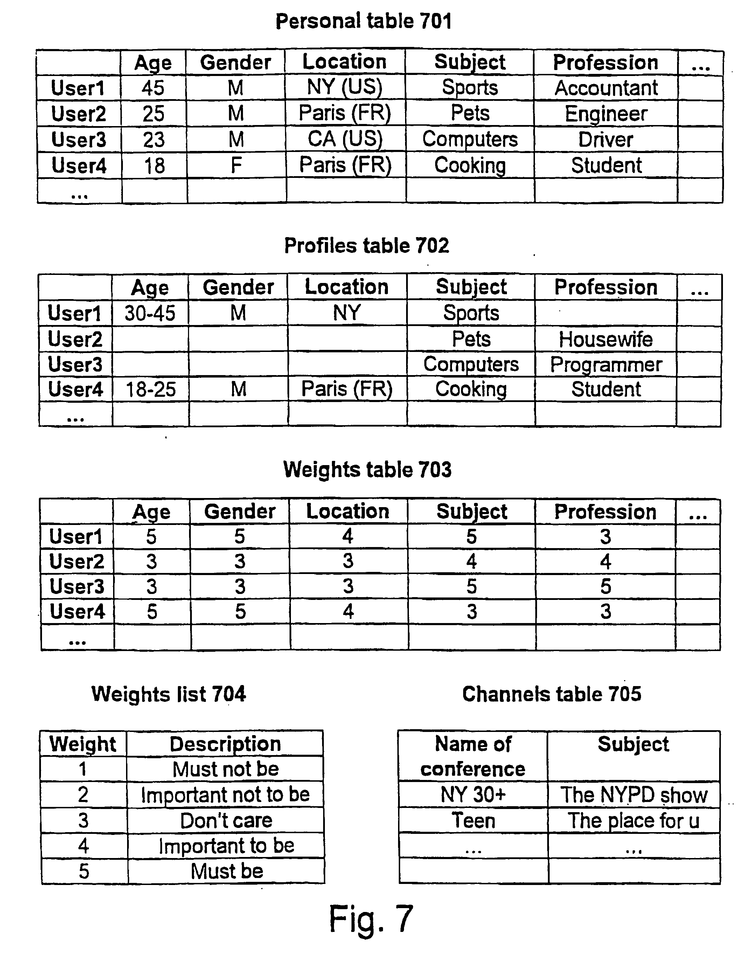

Fig. 7 illustrates the Personal table and the Profiles table, according to a preferred embodiment of the invention. While the Personal table 701 contains information about the user, the Profiles' table 702 contains information about his preferences. The Weights table contains information about the importance the user gives to his preferences.

The weights list 704 expresses levels of importance: from "must not be" to "must be". For instance, there are users who want to chat only about sports, while others may prefer anything but sports. Those values are the contents of Weights table 703.

According to an embodiment of the invention, the location of the user may be static (residence) or dynamic (relevant for mobile phones, according to the information received from his mobile telephone).

According to an embodiment of the invention, the database also contains parameters of automatic invocation of availability for chat. For instance, when a user would like to be automatically declared as available for chat, for how long and what will be his profile during this period.

In the following example, User4 wants to chat only with males between 18 and 25 years old. The subjects of conversation are not important. User1 wants to chat only with men between the ages 30 to 45 and only about sports. He prefers to chat with users from NY.

For the purposes of matching, the system can implement one of the algorithms known in prior art for resolving such problems. Each algorithm has its own benefits and drawbacks.

One example would be a smart algorithm that takes into consideration the preferences of both - the person who is searching and the person who matches and that will express the match in a tangible term, such as percentage of fitness.

Table 705 contains information about the chat-channels through which chats are currently being carried out. It contains two columns: the conference name and the present subject.

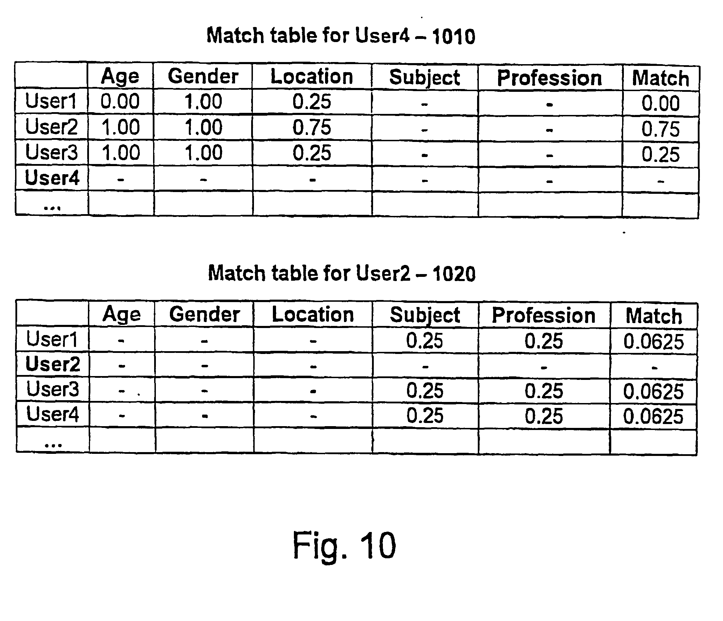

Fig. 10 schematically illustrates match tables, according to a preferred embodiment of the invention. Table 1010 illustrates the match of User4 to the other users, according to the tables illustrated in Fig. 7. The rules are:
a) If the matched criterion is "Don't care", then a minus sign is assigned in the appropriate place in the Match table;
b) If the matched criterion is "Must be" or "Must not be" and the result is positive, then a value of 1.0 is assigned to the appropriate cell in the Match table;
c) If the matched criterion is "Must be" or "Must not be" and the result is negative, then a value of 0.0 is assigned to the appropriate cell in the match table;
d) If the matched criterion is "Important to be" or "Important not to be" and the result is positive, then a value of 0.75 is assigned to the appropriate cell in the match table;
e) If the matched criterion is "Important to be" or "Important not to be" and the result is negative, then a value of 0.25 is assigned to the appropriate cell in the match table.

Therefore, according to table 1010, User2 is the best match for User4, and the "match factor" is 0.75.

Table 1020 illustrates the match of User2 to the other users, according to the tables illustrated in Fig. 7. According to table 1020, User4 matches to User2 only by 0.0625. Therefore, the smallest value of the scores 1.00 and 0.0625 is 0.0625. This value, 0.0625, is suitable for the criterion of "fitness percentage", i.e. 6.25%.

It is obvious that there are better algorithms for performing the match, as known to any average programmer. The algorithm described above was only for the sake of brevity. Moreover, hardware means may also be engaged in order to speed up the matching process.

Chat channels (conferences) can also be preferred or restricted by some personal details, such as gender and age. However, channels table 705 (in Fig. 7 above) contains only two columns: the conference name and the present subject. The match engine can distinguish between the private chat and the conference chat by an additional row in Profiles' table 702, which would express the choice between private chat and conference chat.

According to a preferred embodiment of the invention, the database may contain a 'banned' list. A user can define another user as 'banned' if he does not want any contact with the 'banned' person. The system does not indicate the online presence of either person, and in any case does not connect between them.

It is obvious that the database can be designed in a variety of ways, and still achieve identical results, as any average database professional will understand. This example was presented solely for the purposes of clarification.

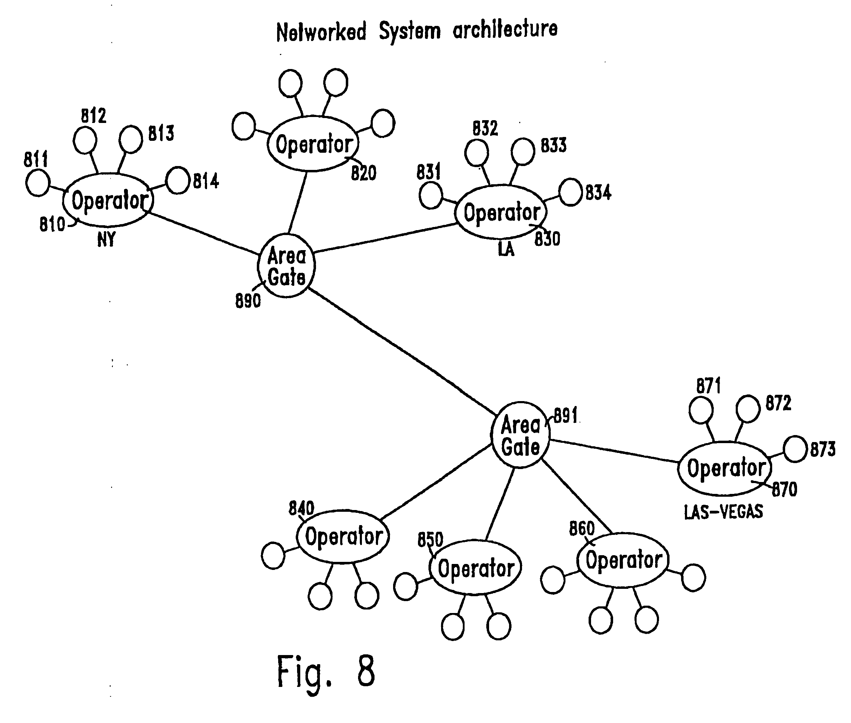

Fig. 8 schematically illustrates a Networked System architecture, according to a preferred embodiment of the invention. Normally, the system operates in the scope of one network operator, such as 810, 820,...,870. Users 811 to 814 are subscribers of operator 810, users 831 to 834 are subscribers of operator 830, users 871 to 873 are subscribers of operator 870, and so forth. Operators 810, 820 and 830 are connected to Area Gate 890 and operators 840 to 870 are connected to Area Gate 891. Operators that wish to be 'networked' are connected to PIC-Gateway (when such gateways are connected together). This connection enables users that are connected to different operators to participate in the same chat sessions. The connection is not limited by country or other regional boundaries. Furthermore, the operators can operate a mixture of network types, e.g. wireline, wireless and long distance networks.

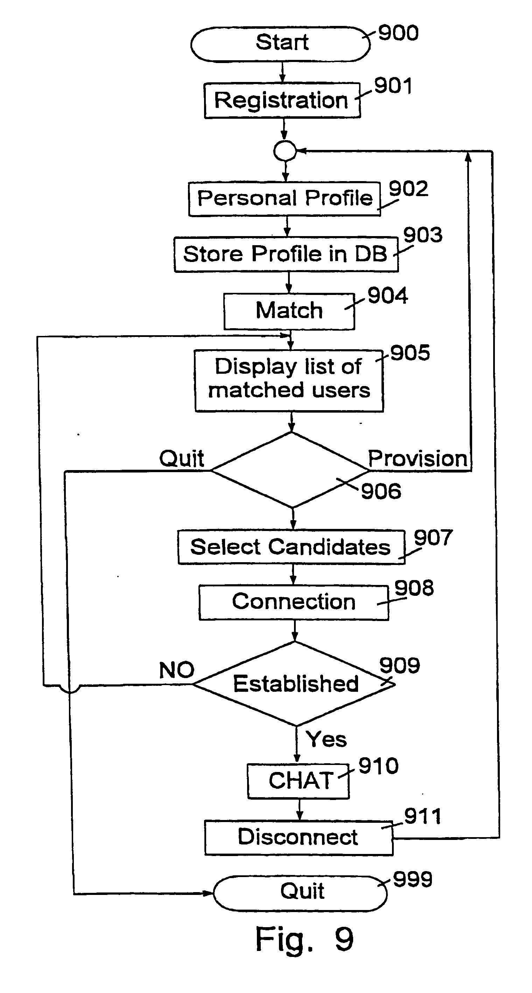

Fig. 9 illustrates a flowchart of the service, according to a preferred embodiment of the invention.
- The process starts at step 900;
- In step 901, the user registers to the system;
- In step 902, the user provides his personal profile and preferences for the present chat;
- In step 903, the system stores the profile in the appropriate database;
- In step 904, the system invokes a match mechanism in order to find proper candidates for chat;
- In step 905, user receives (i.e. SMS, voice announcement, etc.) a full or partial list of the matched candidates from the system.
- In step 906, the user is given a choice of:
   - Quitting. Then control goes to step 999;
   - Returning to the step 902, where the user provides his preferences to this chat; or
   - Selecting candidates for chat from the displayed list. In this case control goes to step 907;
- In step 907, the user selects one or more candidates from the displayed list;
- In step 908, the system tries to establish a telephone connection between the user and the selected candidates;
- In step 909, the system analyses the results of the trial. If a connection was established, control goes to step 910; Otherwise control goes to step 905, where the list of the matched candidates is displayed;
- In step 910, the chat is carried out. During the chat, the user may change his profile and/or preferences by inputting new corresponding parameters, using SMS service, interacting with the core system by PC, etc.;
- In step 911, the chat is disconnected, then control goes to step 902 where the user may provide a new profile to the system, and restart the process.

The invention also has additional and/or optional features that provide substantial operational benefits. One of such features will be called herein "Presence Management". Presence Management means that the subscriber can make himself available or not, to selected individuals or to groups (such as relatives), and this can be done by provisioning or by re-provisioning. The re-provisioning may be a permanent change to the customer profile or preference profile, or, alternatively, may be only a temporary change for a specific session. Such changes can easily be implemented by a computer and/or associated suitable software (for instance, a questionnaire on a Web page). Alternatively, these changes can be carried out by using inputs from a telephone handset.

Another feature and benefit of the invention is the security of information.

This includes not only the CLI (Caller Line Identification) information, but also all personal information beyond what is required to make the match. The system enables the user to decide which information is confidential and which is not.

It should be noted that the system is not limited to subscribers of one service provider, but may be extended to multiple network operators. This can be carried out by using the appropriate network architecture.

The operation of the Core System is controlled by software means, which may comprise, for example, the following parts:
- User interface. A software element intermediates between the user and the Core system. The user is communicating with the Core system by voice information or textual information. This information is translated by this element of the software into a format that is compatible with the Core system;
- Database management. A software element manages data storage, and retrieval to or from the database;
- Switching control. A software element which controls the switching operation for connecting between individual user;
- Matching. A software element matches between users according to their profiles and preferences;
- Provision. A software element manages the provision session. It comprises sub-elements which control the interaction with the user according to the device through which the user communicates (i.e. telephone, PC, etc.) in the provision session.

The above examples and description have of course been provided only for the purpose of illustration, and are not intended to limit the invention in any way. As will be appreciated by the skilled person, the invention can be carried out in a great variety of ways, employing more than one technique from those described above, all without exceeding the scope of the invention.

## Claims

1. Method for carrying out telephone conversations between two or more users (110), **characterised by** the following steps:
a) each user (110) registers and communicates his personal profile and preferences to a system (100) and assigns a weight to each preference according to its importance;
b) said system (100) receives from the users (110) said profiles and said weighted preferences and stores them;
c) said system (100) matches between said users according to their profiles and weighted preferences;
d) said system (100) presents to users (110) a list of candidates for conversations according to the results of said match;
e) users (110) select one or more said candidates from said results; and
f) said system (100) creates a telephone connection between users (110) and selected candidates.

2. Method according to Claim 1, further comprising performing conversation between users (110) and candidates.

3. Method according to Claim 1, further comprising transmitting messages from users (110) to candidates.

4. Method according to Claim 1 or 2, further comprising, if a selected candidate is not available, the step of instructing the system (100) to communicate to the user (110) to whom said candidate has been presented, when said candidate has become available.

5. Method according to Claim 1, further comprising retaining the privacy of each user (110) by keeping his personal profile away from the other users (110) and by not revealing any connection information to said other users (110).

6. Method according to Claim 1, wherein the system (100) creates a telephone connection in private forum only between two users (110).

7. Method according to Claim 1, wherein the system (100) creates a telephone connection in an open forum between a plurality of users (110).

8. Method according to Claim 1, wherein registration and the personal profiles and preferences of the users (110) are communicated to the system (100) by a means chosen from among the group consisting of telephone (421), personal computer (423), fax (422), email and mail.

9. Method according to Claim 1, wherein a user (100) changes his profile while performing conversation.

10. Method according to Claim 1, wherein a user (110) changes his preferences while performing conversation.

11. Method according to Claim 1, further comprising a user's requesting conversation with user by means chosen from the group consisting of Short Message Service SMS, Wireless Application Protocol WAP, Voice-Messages, Interactive Voice Response IVR, and Dual Tone Multi-Frequency DTMF.

12. Method according to Claim 1, further comprising determining the availability or non-availability of a user (110) to selected individuals or groups.

13. Method according to Claim 12, wherein the availability or non-availability of a user (110) is detennined by provisioning or re-provisioning.

14. Method according to Claim 1, further comprising determining by each user (110) the information that can be given to other users (110), beyond what is required to carry out the steps of Claim 1.

15. Apparatus for carrying out telephone conversation between two or more users (110) **characterised by**:
a) a system (100) comprising a memory arranged to register and store the personal profile and preferences of each user (110), wherein a weight is assigned to each preference according to its importance to the corresponding user (110);
b) a processor arranged to match between said users (110) according to their profiles and weighted preferences;
c) a presentation device arranged to present to users (110) a list of candidates for conversations according to the results of the match; and
d) communication links arranged to create telephone connections between users (110) and selected candidates.

16. Apparatus according to Claim 15, further comprising a messaging device for transmitting messages from users (110) to candidates.

17. Apparatus according to Claim 15, comprising private telephone links arranged to create a telephone connection in private forum only between two users (110).

18. Apparatus according to Claim 15, comprising telephonic links arranged to create a telephone connection in open forum between a plurality of users (110).

19. Apparatus according to Claim 15, comprising data links arranged to receive the registration and the personal profiles and preferences of the users (110) by the system (100) by a device chosen from among the group consisting of telephone (421), personal computer (423), fax (422), email and mail.

20. Apparatus according to Claim 15, further comprising messaging circuitry for allowing a user (110) to request conversation with another user (110) using a service chosen from the group consisting of Short Message Service SMS, Wireless Application Protocol WAP, Voice-Messages, Interactive Voice Response IVR, and Dual Tone Multi-Frequency DTMF.

21. Apparatus according to Claim 15, further comprising circuitry for determining the availability or non-availability of a user (110) to selected individuals or to groups.

## Patentansprüche

1. Verfahren zum Ausführen von Telefongesprächen zwischen zwei oder mehreren Nutzern (110), **gekennzeichnet durch** die folgenden Schritte:
(a) jeder Nutzer (110) registriert und kommuniziert sein persönliches Profil und seine Präferenzen einem System (100) und bestimmt ein Gewicht für jede Präferenz gemäß ihrer Bedeutung;
(b) das System (100) empfängt die Profile und die gewichteten Präferenzen von den Nutzern (110) und speichert diese;
(c) das System (100) gleicht zwischen den Nutzern gemäß ihrer Profile und ihrer gewichteten Präferenzen ab;
(d) das System präsentiert den Nutzern (110) eine Liste von Kandidaten für Gespräche gemäß der Ergebnisse des Abgleichs;
(e) die Nutzern (110) wählen einen oder mehrere Kandidaten aus den Ergebnissen aus; und
(f) das System erstellt eine Telefonverbindung zwischen den Nutzern (110) und den ausgewählten Kandidaten.

2. Verfahren nach Anspruch 1,
weiter aufweisend ein Durchführen eines Gespräches zwischen den Nutzern (110) und den Kandidaten.

3. Verfahren nach Anspruch 1,
weiter aufweisend ein Übertragen von Nachrichten von den Nutzern (110) zu den Kandidaten.

4. Verfahren nach Anspruch 1 oder 2,
weiter aufweisend, falls ein ausgewählter Nutzer nicht verfügbar ist, den Schritt eines Anweisens an das System (100), dem Nutzer (110), dem der Kandidat präsentiert worden ist, zu kommunizieren, wann der Kandidat verfügbar geworden ist.

5. Verfahren nach Anspruch 1,
weiter aufweisend ein Zurückhalten der Privatsphäre jedes Nutzers (110) durch Zurückhalten seines persönlichen Profils vor den anderen Nutzern (110) und durch nicht Preisgeben jeder Verbindungsinformation an die anderen Nutzer (110).

6. Verfahren nach Anspruch 1,
wobei das System (100) eine Telefonverbindung in einem privaten Forum nur zwischen zwei Nutzern (110) erstellt.

7. Verfahren nach Anspruch 1,
wobei das System (1) eine Telefonverbindung in einem offenen Forum zwischen einer Vielzahl von Nutzern (110) erstellt.

8. Verfahren nach Anspruch 1,
wobei die Registrierung und die persönlichen Profile und die Präferenzen der Nutzer (110) dem System (100) durch eine Einrichtung ausgewählt aus der Gruppe bestehend aus Telefon (421), Personalcomputer (423), Fax (422), E-Mail und Post, kommuniziert wird.

9. Verfahren nach Anspruch 1,
wobei ein Nutzer (100) sein Profil während der Durchführung des Gespräches ändert.

10. Verfahren nach Anspruch 1,
wobei ein Nutzer (110) seine Präferenzen während der Durchführung des Gespräches ändert.

11. Verfahren nach Anspruch 1,
weiter aufweisend eine Aufforderung eines Nutzers für ein Gespräch mit einem Nutzer mittels einer Einrichtung, ausgewählt aus der Gruppe Kurznachrichtendienst SMS, WAP-Protokoll WAP, Sprachnachricht, Interaktive Sprachausgabe und Zweiton-Mehrfrequenzwahl.

12. Verfahren nach Anspruch 1,
weiter aufweisend ein Bestimmen der Verfügbarkeit oder Nicht-Verfügbarkeit eines Nutzers zu ausgewählten Personen oder Gruppen.

13. Verfahren nach Anspruch 12,
wobei die Verfügbarkeit oder Nicht-Verfügbarkeit eines Nutzers (110) durch Bereithaltung oder Wieder-Bereithaltung bestimmt wird.

14. Verfahren nach Anspruch 1,
weiter aufweisend ein Bestimmen der Information durch jeden Nutzer (110), die an andere Nutzer (110) gegeben werden kann, darüber hinaus was zum Ausführen der Schritte von Anspruch 1 erforderlich ist.

15. Vorrichtung zum Ausführen von Telefongesprächen zwischen zwei oder mehreren Nutzern, **gekennzeichnet durch**:
(a) ein System (100), welches einen Speicher aufweist, der angeordnet ist, das persönliche Profil und Präferenzen jedes Nutzers (110) zu registrieren und zu speichern, wobei ein Gewicht für jede Präferenz gemäß ihrer Bedeutung für den entsprechenden Nutzer (110) bestimmt ist;
(b) ein Prozessor, der angeordnet ist, zwischen Nutzern (110) gemäß ihrer Profile und der gewichteten Präferenzen abzugleichen;
(c) einer Präsentiervorrichtung, die angeordnet ist, den Nutzern (110) eine Liste von Kandidaten für Gespräche gemäß der Resultate des Abgleichs zu präsentieren; und
(d) eine Gesprächsverbindung, die angeordnet ist, Telefonverbindungen zwischen Nutzern (110) und ausgewählten Kandidaten zu erstellen.

16. Vorrichtung nach Anspruch 15,
weiter aufweisend eine Datentransfervorrichtung zum Übertragen von Nachrichten von den Nutzern (110) zu den Kandidaten.

17. Vorrichtung nach Anspruch 15,
aufweisend private Telefonverbindungen, die angeordnet sind, eine Telefonverbindung in einem privaten Forum nur zwischen zwei Nutzern (110) zu erstellen.

18. Vorrichtung nach Anspruch 15,
aufweisend Telefonverbindungen, die angeordnet sind, eine Telefonverbindung in einem offenen Forum zwischen einer Vielzahl von Nutzern (110) zu erstellen.

19. Vorrichtung nach Anspruch 15,
aufweisend Datenverbindungen, die angeordnet sind, die Registrierung und die persönlichen Profile und Präferenzen der Nutzer (110) durch das System (100) mittels einer Vorrichtung, ausgewählt aus der Gruppe bestehend aus Telefon (421), Personalcomputer (423), Fax (422), E-Mail und Post, zu empfangen.

20. Vorrichtung nach Anspruch 15,
weiter aufweisend eine Datentransferschaltung, um einem Nutzer (110) zu erlauben, ein Gespräch mit einem anderen Nutzer unter Verwendung eines Dienstes, ausgewählt aus der Gruppe bestehend aus Kurznachrichtendienst SMS, WAP-Protokoll WAP, Sprachnachrichten, Interaktive Sprachausgabe IVR und Zweiton-Mehrfrequenzwahl DTMF, anzufragen.

21. Verfahren nach Anspruch 15,
weiter aufweisend eine Schaltung zum Bestimmen der Verfügbarkeit oder Nicht-Verfügbarkeit eines Nutzers (110) für ausgewählte Personen oder Gruppen.

## Revendications

1. Procédé pour effectuer des conversations téléphoniques entre deux utilisateurs ou plus (110) **caractérisé par** les étapes suivantes :
a) chaque utilisateur (110) enregistre et communique son profil personnel et ses préférences à un système (100) et assigne un poids à chaque préférence selon son importance ;
b) ledit système (100) reçoit de l'utilisateur (110) lesdits profils et lesdites préférences pondérés et les stocke ;
c) ledit système (100) associe lesdits utilisateurs selon leur profil et leurs préférences pondérés ;
d) ledit système (100) présente aux utilisateurs (110) une liste de candidats pour des conversations selon les résultats de ladite association ;
e) les utilisateurs (110) sélectionnent un ou plusieurs dits candidats à partir desdits résultats ; et
f) ledit système (100) créé une connexion téléphonique entre les utilisateurs (110) et les candidats sélectionnés.

2. Procédé selon la revendication 1, comprenant en outre d'effectuer une conversation entre les utilisateurs (110) et les candidats.

3. Procédé selon la revendication 1, comprenant en outre de transmettre des messages des utilisateurs (110) vers les candidats.

4. Procédé selon la revendication 1 ou 2, comprenant en outre, si un candidat sélectionné n'est pas disponible, l'étape d'instruire au système (100) de communiquer l'utilisateur (110) auquel ledit candidat a été présenté lorsque ledit candidat redevient disponible.

5. Procédé selon la revendication 1, comprenant en outre de préserver la confidentialité de chaque utilisateur (110) en conservant son profil personnel hors de portée des autres utilisateurs (110) et en ne révélant aucune information de connexion auxdits autres utilisateurs (110).

6. Procédé selon la revendication 1, dans lequel le système (100) créé une connexion téléphonique dans un forum privé uniquement entre deux utilisateurs (110).

7. Procédé selon la revendication 1, dans lequel le système (100) créé une connexion téléphonique dans un forum ouvert entre une pluralité d'utilisateurs (110).

8. Procédé selon la revendication 1, dans lequel l'enregistrement et les profils personnels et les préférences des utilisateurs (110) sont communiqués au système (100) par des moyens choisis parmi le groupe consistant en un téléphone (421), un ordinateur personnel (423), un fax (422), un email et un courrier.

9. Procédé selon la revendication 1, dans lequel un utilisateur (110) change son profil tout en effectuant une conversation.

10. Procédé selon la revendication 1, dans lequel un utilisateur (110) change ses préférences tout en effectuant une conversation.

11. Procédé selon la revendication 1, comprenant en outre une conversation de requête d'utilisateur avec un utilisateur par des moyens choisis parmi le groupe consistant en un service de messages courts SMS, un protocole d'applications sans fil WAP, des messages vocaux, une réponse vocale interactive IVR et une multifréquence à deux tonalités DTMF.

12. Procédé selon la revendication 1, comprenant en outre de déterminer la disponibilité ou la non disponibilité d'un utilisateur (110) pour des individus ou des groupes sélectionnés.

13. Procédé selon la revendication 12, dans lequel la disponibilité ou la non disponibilité d'un utilisateur (110) est déterminé par approvisionnement ou réapprovisionnement.

14. Procédé selon la revendication 1, comprenant en outre de déterminer pour chaque utilisateur (110) les informations qui peuvent être données aux autres utilisateurs (110) au-delà de ce qui est requis pour effectuer les étapes de la revendication 1.

15. Appareil pour effectuer une conversation téléphonique entre deux utilisateurs ou plus (110) **caractérisé par** :
a) un système (100) comprenant une mémoire arrangée pour enregistrer et stocker le profil personnel et les préférences de chaque utilisateur (110), dans lequel un poids est assigné à chaque préférence selon son importance pour l'utilisateur correspondant (110) ;
b) un processeur arrangé pour associer lesdits utilisateurs (110) selon leur profil et leur préférence pondérée ;
c) un dispositif de présentation arrangé pour présenter aux utilisateurs (110) une liste de candidats pour des conversations selon les résultats de l'association ; et
d) des liaisons de communication arrangées pour créer des connexions téléphoniques entre des utilisateurs (110) et des candidats sélectionnés.

16. Appareil selon la revendication 15, comprenant en outre un dispositif de messagerie pour transmettre des messages provenant d'utilisateurs (110) vers des candidats.

17. Appareil selon la revendication 15, comprenant en outre des liaisons téléphoniques privées arrangées pour créer une connexion téléphonique dans un forum privé, uniquement entre deux utilisateurs (110).

18. Appareil selon la revendication 15, comprenant des liaisons téléphoniques arrangées pour créer une connexion téléphonique dans un forum ouvert entre une pluralité d'utilisateurs (110).

19. Appareil selon la revendication 15, comprenant des liaisons de données arrangées pour recevoir l'enregistrement et les profils personnels et les préférences des utilisateurs (110) par le système (100) par un dispositif choisi parmi le groupe consistant en un téléphone (421), un ordinateur personnel (423), un fax (422), un email et un courrier.

20. Appareil selon la revendication 15, comprenant en outre une circuiterie de messagerie pour permettre à l'utilisateur (110) de demander une conversation avec un autre utilisateur (110) en utilisant un service choisi parmi le groupe consistant en un service de messages courts SMS, un protocole d'application sans fil WAP, des messages vocaux, une réponse vocale interactive IVR et une multifréquence à double tonalité DTMF.

21. Appareil selon la revendication 15, comprenant en outre une circuiterie pour déterminer la disponibilité ou la non disponibilité d'un utilisateur (110) pour des individus ou des groupes sélectionnés.
